# EUROPÄISCHE PATENTSCHRIFT

(11) **EP 3 144 544 B1**
(45) Veröffentlichungstag und Bekanntmachung des Hinweises auf die Patenterteilung: **20.06.2018**
(21) Anmeldenummer: 16184774.4
(22) Anmeldetag: 18.08.2016
(51) Int. Cl.: F16B 7/04, F16M 11/14, F16C 11/10

(54) **GELENKANORDNUNG ZUR POSITIONIERUNG VON BAUTEILEN**
HINGE ASSEMBLY FOR POSITIONING ELEMENTS
SYSTEME D'ARTICULATION DESTINE AU POSITIONNEMENT DE COMPOSANTS

(30) Priorität: 17.09.2015 DE 202015104945 U; 15.12.2015 DE 202015106815 U
(43) Veröffentlichungstag der Anmeldung: 22.03.2017
(73) Patentinhaber: RK Rose + Krieger GmbH Verbindungs- und Positioniersysteme, 32423 Minden (DE)
(72) Erfinder: SCHULDE, Maximilian, 32425 Minden (DE); BRAUN, Johann, 32369 Rahden (DE); NEUBAUR, Michael, 31655 Stadthagen (DE)
(74) Vertreter: Dantz, Jan Henning

(56) Entgegenhaltungen:
- WO-A1-2010/148698
- WO-A1-2014/195745
- DE-A1- 2 242 266
- US-A- 5 769 370
- US-A1- 2005 092 873

## Beschreibung

Die vorliegende Erfindung betrifft eine Gelenkanordnung zur Positionierung von Bauteilen nach dem Oberbegriff des Anspruches 1.

Die EP 2 708 792 A2 offenbart einen Stativkopf mit einem Kugelgelenk, bei dem eine Gelenkkugel an einer Gelenkpfanne in einem Gehäuse festlegbar ist. Die Gelenkkugel kann dabei über einen Sperrstift fixiert werden, so dass diese nur noch um eine Achse drehbar ist. Die Gelenkanordnung ist aus vergleichsweise vielen Einzelteilen hergestellt und kann nur begrenzt Klemmkräfte aufnehmen.

Die DE 2 242 266 offenbart eine Halterung für optische Geräte, bei der ein Kugelkopf auf einer Seite an einer Kugelpfanne anliegt und auf der gegenüberliegenden Seite durch eine Druckschraube mit einem Kunststoffdruckstück festklemmbar ist.

Es ist daher Aufgabe der vorliegenden Erfindung, eine Gelenkanordnung zur Positionierung von Bauteilen zu schaffen, die einfach zu montieren ist und hohe Haltekräfte aufnehmen kann.

Diese Aufgabe wird mit einer Gelenkanordnung mit den Merkmalen des Anspruches 1 gelöst.

Die erfindungsgemäße Gelenkanordnung umfasst eine Gelenkkugel, die an einem Klemmkörper festlegbar ist, wobei dieser eine Aufnahme aufweist, in die mindestens eine Schale mit einer Kugelpfanne zur Aufnahme eines Abschnittes der Gelenkkugel angeordnet ist, die über den Klemmkörper gegen die Gelenkkugel anpressbar ist. Dadurch kann die Gelenkkugel in unterschiedliche Richtungen relativ zu dem Klemmkörper ausgerichtet werden, indem die Gelenkkugel entlang der Kugelpfanne verschwenkt wird. In der gewünschten Position kann dann die Klemmeinrichtung über Spannmittel den Klemmkörper zusammendrücken und den Klemmkörper relativ zu der Gelenkkugel fixieren. Durch die Zwischenschaltung der mindestens einen Schale kann der Klemmkörper mit einfacher Geometrie hergestellt werden, während die Anpassung an die Kugelform der Gelenkkugel über die Kugelpfanne an der Schale erfolgt. Dies ermöglicht einen einfachen Aufbau und in der fixierten Position über die Klemmung hohe Reib- und Haltekräfte.

Gemäß der Erfindung weist der Klemmkörper eine im Wesentlichen zylinderförmige Aufnahme auf, in der mindestens zwei Schalen angeordnet sind. Die mindestens zwei Schalen mit einer Kugelpfanne umgreifen die Gelenkkugel. Dadurch kann die Gelenkkugel entlang der Kugelpfannen an den Schalen verschwenkt werden und ist dann nach der Klemmung von den Kugelpfannen umschlossen.

Für eine einfache Montage weisen die Schalen eine äußere Umfangsfläche auf, die im Wesentlichen zylindrisch ausgebildet ist. Dann können die Schalen auf einfache Weise in die Aufnahme an dem Klemmkörper eingesteckt werden. Die Schalen können dabei am äußeren Umfang eine Nut aufweisen, in die ein Haltemittel zur Fixierung der Schalen eingefügt ist, so dass die Schalen auf einfache Weise als vormontierte Einheit in die Aufnahme eingesteckt werden können.

Der Klemmkörper weist vorzugsweise an mindestens einer Seite einen Schlitz auf, der sich parallel zur Längsrichtung der Aufnahme erstreckt. Benachbart zu dem Schlitz kann an dem Klemmkörper mindestens eine Halterung für ein Spannmittel vorgesehen sein, mittels dem der Klemmkörper zusammendrückbar ist. Der Schlitz gibt dem Klemmkörper ausreichend Elastizität, um die in der Aufnahme des Klemmkörpers angeordneten Schalen zusammenzudrücken.

Für ein einfaches Verspannen des Klemmkörpers relativ zu der Gelenkkugel umfassen die Spannmittel vorzugsweise einen verschwenkbaren Hebel, so dass eine werkzeuglose Betätigung möglich ist. Der Hebel kann über ein Gewinde oder eine Kurvenführung nach Art eines Schnellverschlusses den Klemmkörper zusammendrücken.

In einer bevorzugten Ausgestaltung sind zwei, drei oder vier Schalen vorgesehen, die zusammen eine Hülse ausbilden. Die Schalen können dabei aus mehreren Teilen zusammengesetzt oder integral ausgebildet sein. Bei einer integralen Ausbildung können die Schalen über einen endseitigen Verbindungssteg miteinander verbunden sein, wobei zwischen den Schalen ein parallel zur Längsrichtung verlaufender Schlitz verläuft. Dadurch können mehrere Schalen als Einheit verarbeitet werden.

Die Schalen können dabei für hohe Haltekräfte aus Metall hergestellt sein. Auch die Gelenkkugel kann aus Metall hergestellt sein, so dass hohe Anpresskräfte erreicht werden können. Alternativ können der Klemmkörper, die Schalen und/oder die Gelenkkugel auch aus Kunststoff hergestellt sein.

Um in einer gelösten Position ein Herausfallen der mindestens einen Schale zu vermeiden, kann an dem Klemmkörper ein Sicherungselement zur Fixierung der Schale an dem Klemmkörper vorgesehen sein. Das Sicherungselement kann beispielsweise als radial angeordneter Gewindebolzen ausgebildet sein.

Die Erfindung wird nachfolgend anhand von zwei Ausführungsbeispielen mit Bezug auf die beigefügten Zeichnungen näher erläutert. Es zeigen:
- Figur 1: eine perspektivische Ansicht einer erfindungsgemäßen Gelenkanordnung;
- Figur 2: eine perspektivische Explosionsdarstellung der Gelenkan-ordnung der Figur 1;
- Figuren 3A bis 3C: mehrere Ansichten der Gelenkanordnung der Figur 1 in einer verspannten Position;
- Figuren 4A bis 4E: mehrere Ansichten einer Schale der Gelenkanordnung der Figur 1;
- Figuren 5A bis 5C: mehrere Ansichten der Gelenkkugel der Gelenkanordnung der Figur 1;
- Figur 6: eine perspektivische Explosionsdarstellung eines modifizierten Ausführungsbeispiels einer erfindungsgemäßen Gelenkanordnung;
- Figur 7: eine perspektivische Ansicht eines weitere Ausführungsbeispiels einer erfindungsgemäßen Gelenkanordnung, und
- Figuren 8A bis 8D: mehrere Ansichten der Schalen der Gelenkanordnung der Figur 7.

Eine Gelenkanordnung 1 dient zur Positionierung von Bauteilen relativ zueinander und umfasst eine Gelenkkugel 2, die über ein stabförmiges Verbindungsmittel 21 mit einem scheibenförmigen Halteelement 20 verbunden ist. An dem Halteelement 20 kann ein erstes Bauteil über Befestigungsmittel fixiert werden.

Die Gelenkkugel 2 ist an einem Klemmkörper 3 fixierbar, der in dem dargestellten Ausführungsbeispiel als Rohrverbinder ausgebildet ist und eine hülsenförmige Aufnahme 4 zum Einfügen und Festklemmen eines Rohres aufweist. Es ist allerdings auch möglich, statt dem scheibenförmigen Haltemittel 20 und dem Rohrverbinder andere Befestigungsmittel an der Gelenkkugel 2 oder dem Klemmkörper 3 vorzusehen, um ein erstes Bauteil relativ zu einem zweiten Bauteil zu positionieren.

Die Gelenkanordnung 1 umfasst an dem Klemmkörper 3 eine Klemmeinrichtung 5, die über einen verschwenkbaren Hebel 6 betätigbar ist.

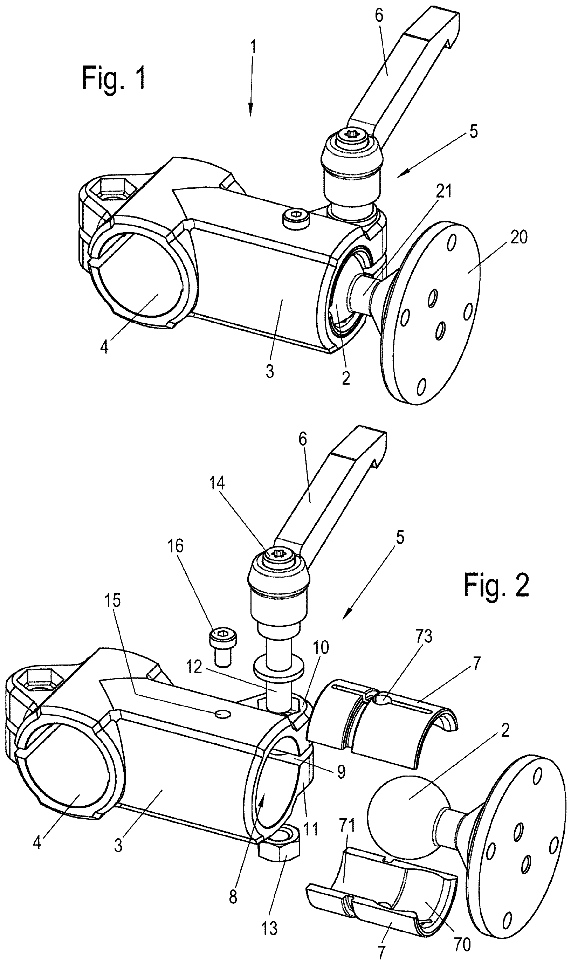

Wie aus Figur 2 ersichtlich ist, weist der Klemmkörper 3 eine zylindrische Aufnahme 8 auf, die auf der zu der Aufnahme 4 gewandten Seite geschlossen ist und in die zwei Schalen 7 zusammen mit der Gelenkkugel 2 einsteckbar sind. Der Klemmkörper 3 umfasst dabei einen Schlitz 9, der parallel zur Längsrichtung der zylindrischen Aufnahme 8 ausgerichtet ist. Benachbart zu dem Schlitz 9 ist eine erste Halterung 10 und auf der gegenüberliegenden Seite des Schlitzes 9 eine zweite Halterung 11 vorgesehen, an denen die Klemmeinrichtung 5 gehalten ist. Die Klemmeinrichtung 5 umfasst einen Gewindebolzen 12, der durch die Halterungen 10 und 11 durchgesteckt ist und in eine an der Halterung 11 fixierte Mutter 13 eingedreht ist. Durch Drehen des Gewindebolzens 12 in der drehfest angeordneten Mutter 13 kann somit die Breite des Schlitzes 9 vermindert werden, um die in der Aufnahme 8 angeordneten Schalen 7 gegen die Gelenkkugel 2 zu drücken. Der Hebel 6 ist dabei drehfest mit einem Schraubenkopf 14 gekoppelt, so dass wahlweise über ein Werkzeug an dem Schraubenkopf 14 oder dem Hebel 6 die Klemmeinrichtung 5 gespannt werden kann. Jede Schale 7 weist dabei eine Kugelpfanne 70 auf, also einen Abschnitt, der entsprechend dem Umfang der Gelenkkugel 2 gekrümmt ausgebildet ist, so dass durch ein Verspannen der Klemmeinrichtung 5 der Klemmkörper 3 die Schalen 7 gegen die Gelenkkugel 2 drückt und diese sowohl in Längsrichtung der Aufnahme 8 als auch in alle anderen Richtungen klemmend fixiert ist.

Um in einer gelösten Position der Klemmeinrichtung 5 ein Herausziehen der Schalen 7 und der Gelenkkugel 2 zu vermeiden, ist ein Sicherungselement 16 in Form einer Schraube vorgesehen, das in eine Gewindebohrung 15 an dem Klemmkörper 3 eingedreht ist. Das Sicherungselement 16 kann dabei mit einem vorderen Abschnitt in eine Öffnung 73 der Schale 7 eingreifen, so dass ein Herausziehen der Schalen 7 verhindert wird. Die beiden Schalen 7 bilden dabei zusammen eine zylindrische Hülse aus, die über ein nicht dargestelltes Haltemittel aneinander fixiert sind.

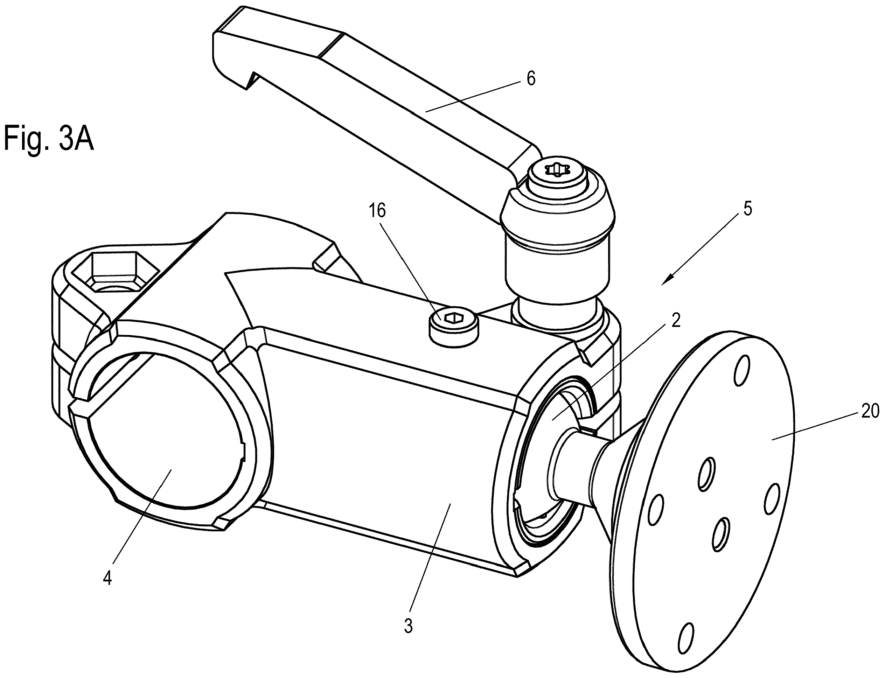

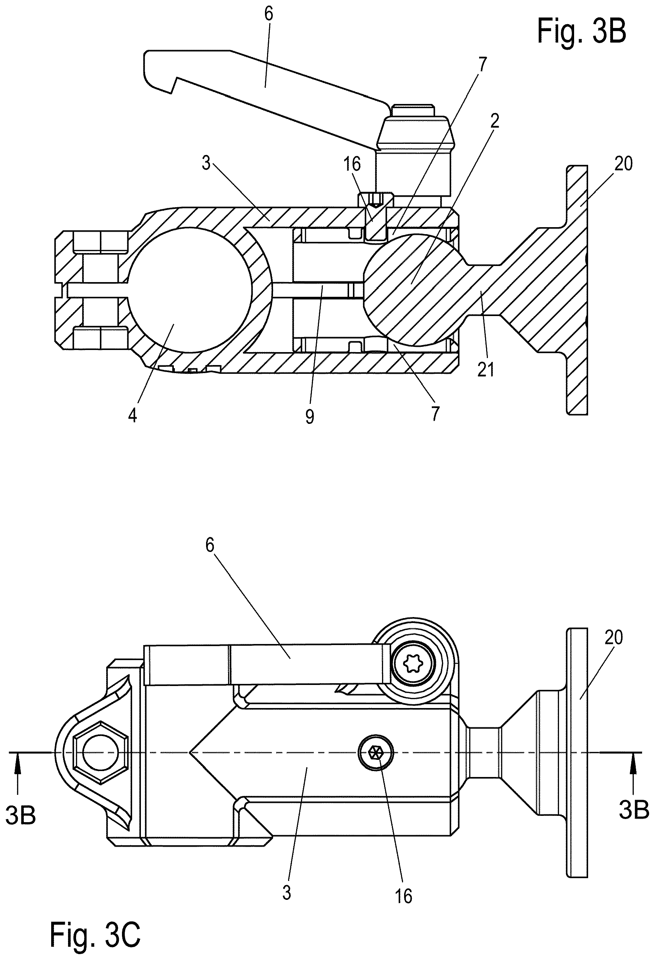

In den Figuren 3A bis 3C ist die Gelenkanordnung 1 in einer verspannten Position gezeigt, in der der Hebel 6 verschwenkt wurde, um den Klemmkörper 3 zu verspannen und dadurch die Schalen 7 gegen die Gelenkkugel 2 zu drücken. Die Gelenkkugel 2 ist an den Kugelpfannen 70 der Schalen 7 form- und Kraftschlüssig gehalten. Das Sicherungselement 16 durchgreift zumindest teilweise eine Öffnung in der Schale 7, so dass eine zusätzliche Sicherung gegen ein Herausziehen der Gelenkkugel 2 vorhanden ist.

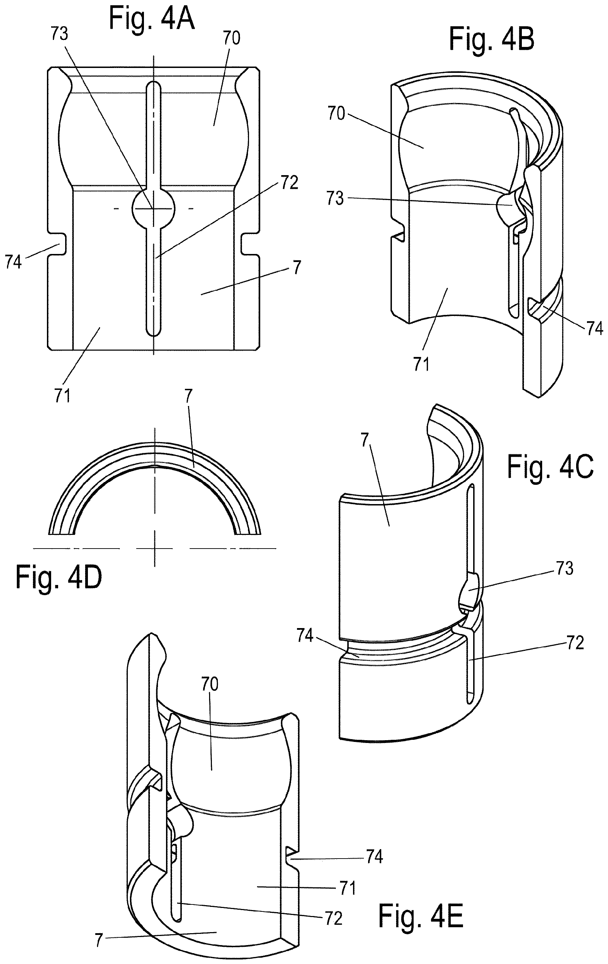

In den Figuren 4A bis 4E ist eine Schale 7 im Detail dargestellt. Die Schale 7 ist als Halbschale ausgebildet, so dass zwei Schalen 7 zusammen eine im Wesentlichen zylindrische Hülse ausbilden. An einer Innenseite jeder Schale 7 ist in einem ersten Bereich eine Kugelpfanne 70 ausgebildet, die in axiale Richtung der Schale entsprechend der Gelenkkugel 2 gekrümmt ist. Ein weiterer Abschnitt 71 der Schale 7 ist zylindrisch ausgebildet und dient zur Verlängerung der Schale 7, damit diese vollständig in die Aufnahme 8 des Klemmkörpers 3 eingeschoben werden kann. An einer Außenseite der Schale 7 ist eine Nut 74 am Umfang ausgebildet, in die ein Haltemittel in Form eines elastischen Ringes, beispielsweise einen O-Ringes, eingefügt werden kann, so dass zwei Schalen 7 als vormontierte Einheit aneinander gehalten sind, wobei ein Auseinanderdrücken der Schalen 7 zum Einfügen der Gelenkkugel 2 in die Kugelpfanne 70 möglich ist.

Jede Schale 7 weist ferner einen Schlitz 72 auf, der sich in Längsrichtung der Schale 7 erstreckt und dazu dient, eine gewisse Elastizität der Schale 7 zu erhalten, insbesondere wenn die Schale 7 durch den Klemmkörper 3 zusammengedrückt wird. Dadurch können die Klemmkräfte erhöht werden, wenn der Klemmkörper 3 die Schale 7 gegen die Gelenkkugel 2 drückt. Im Bereich des Schlitzes 72, der sich nicht über die gesamte Länge erstreckt, um die Schale 7 nicht zu teilen, befindet sich eine Öffnung 73, in die das Sicherungselement 16 einfügbar ist.

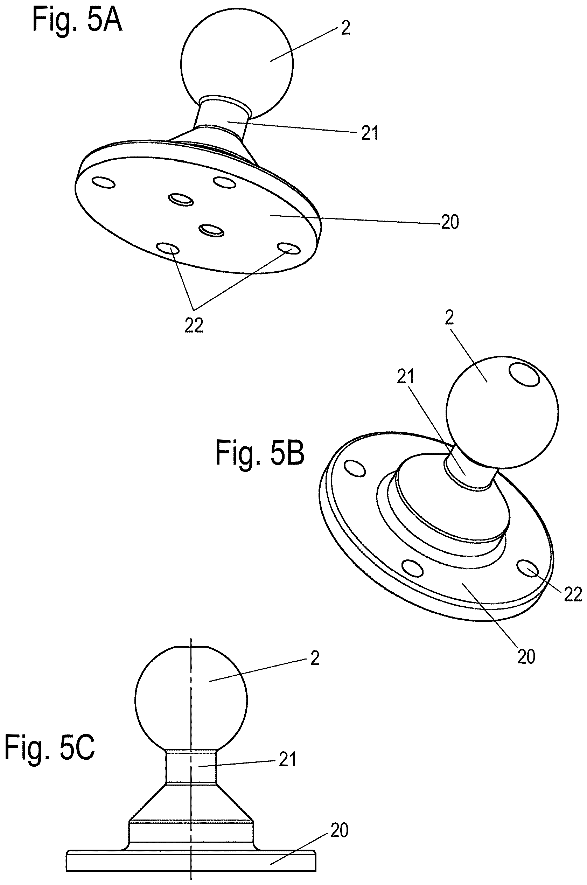

In den Figuren 5A bis 5C ist die Gelenkkugel 2 im Detail gezeigt, die über einen stabförmiges Verbindungsmittel 21 mit dem scheibenförmigen Halteelement 20 verbunden ist. An dem scheibenförmigen Halteelement 20 sind Öffnungen 22 zum Einfügen von Befestigungsmitteln vorgesehen. Die Gelenkkugel 2 kann mit dem scheibenförmigen Halteelement 20 integral ausgebildet sein, beispielsweise aus Metall oder Kunststoff.

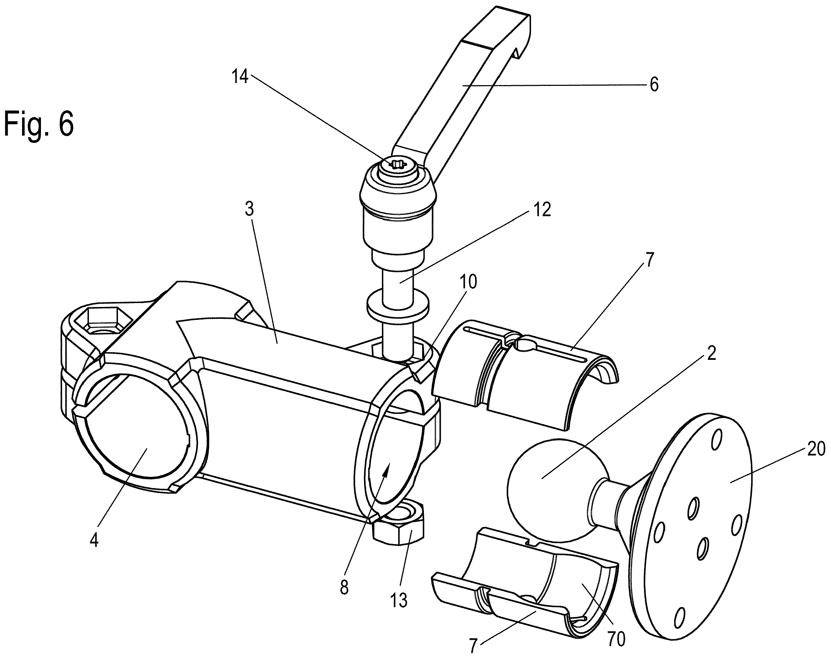

In Figur 6 ist eine modifizierte Ausführungsform einer Gelenkanordnung gezeigt, bei der die gleichen Bauteile dieselben Bezugszeichen wie bei dem ersten Ausführungsbeispiel besitzen. Das Ausführungsbeispiel der Figur 6 unterscheidet sich darin, dass kein Sicherungselement 16 vorgesehen ist, das in eine Gewindebohrung 15 eingefügt ist. Vielmehr werden die beiden Schalen 7 zusammen mit der Gelenkkugel 2 in die Aufnahme 8 eingefügt und dann über die Klemmeinrichtung 5 fixiert. Bei diesem Ausführungsbeispiel muss nach dem Lösen der Klemmeinrichtung 5 dafür Sorge getragen werden, dass die Gelenkkugel 2 mit den Schalen 7 nicht versehentlich aus der Aufnahme 8 herausgezogen wird.

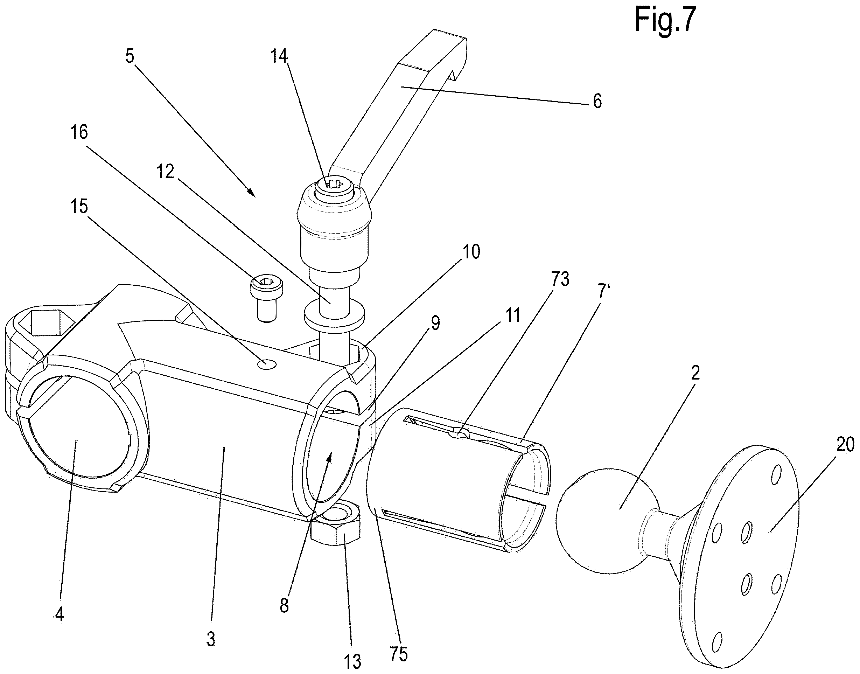

In Figur 7 ist eine weitere Ausführungsform einer erfindungsgemäßen Gelenkanordnung dargestellt, wobei der Klemmkörper 3 und die Klemmeinrichtung 5 oder Spanneinrichtung wie bei den vorangegangenen Ausführungsbeispielen ausgebildet sind. In die Aufnahme 8 des Klemmkörpers 3 werden allerdings nicht getrennte Schalen, sondern Schalen 7' eingefügt, die integral miteinander ausgebildet sind und über Verbindungsstege 75 aneinander gehalten sind. In die Schalen 7' wird wie bei den vorangegangenen Ausführungsbeispielen eine Gelenkkugel 2 eingefügt, an der ein Halteelement 20 festgelegt ist. An einem Schlitz 72 zwischen zwei Schalen 7' ist eine Öffnung 73 ausgebildet, in die das Sicherungselement 16 eingefügt werden kann, um die Schalen 7' in dem Klemmkörper 3 gegen ein Herausziehen zu sichern.

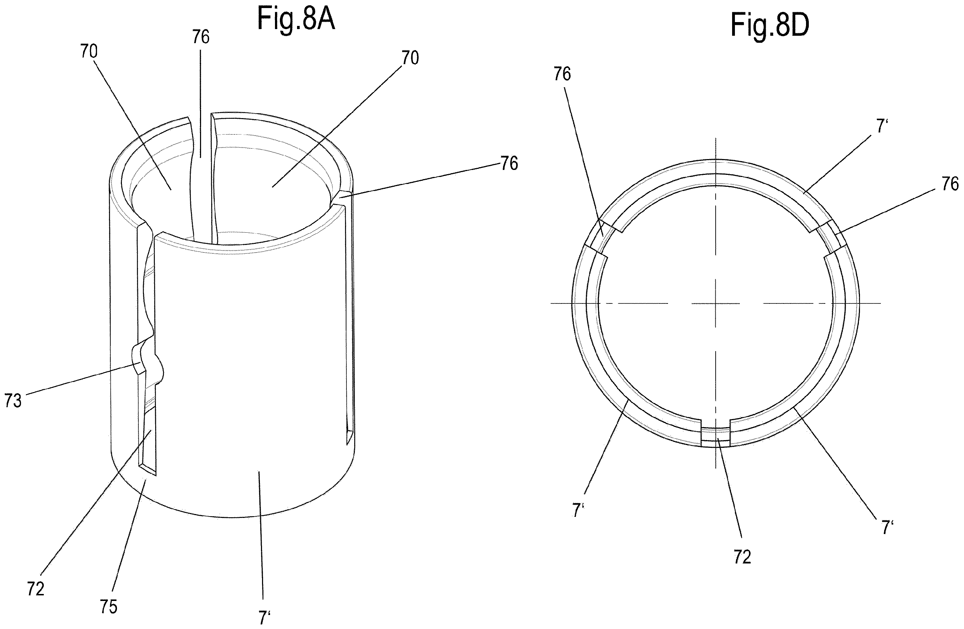

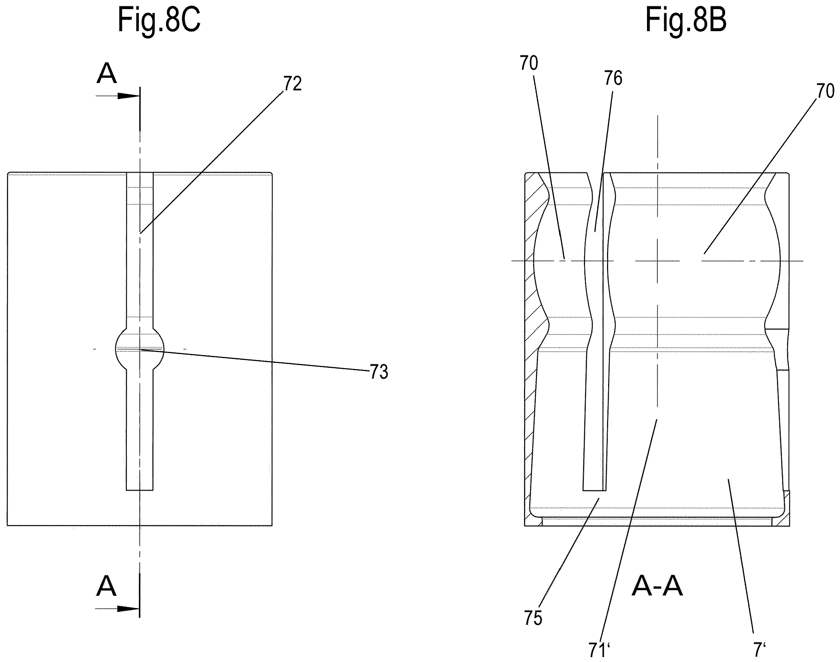

In den Figuren 8A bis 8D sind die Schalen 7' bzw. der aus den Schalen 7' gebildete Körper im Detail dargestellt. Es sind drei Schalen 7' vorgesehen, die an einer Endseite über Verbindungsstege 75 aneinander gehalten sind. Die Trennung der Schalen erfolgt über Schlitze 76 und 72, die sich parallel zur Längsrichtung des hülsenförmigen Körpers erstrecken, der aus den Schalen 7' gebildet wird. Die Schalen 7' bilden zusammen im Wesentlichen eine zylindrische Außenoberfläche. Jede Schale 7' weist einen Abschnitt auf, an dem eine Kugelpfanne 70 ausgebildet ist, an der die Gelenkkugel 2 klemmend festgelegt wird. Die Kugelpfannen 70 bilden somit eine ringförmige Aufnahme für die Gelenkkugel 2 aus. Ferner weist jede Schale 7' einen Abschnitt 71' auf, der sich zur Endseite hin verjüngt, wobei an der Endseite die Verbindungsstege 75 ausgebildet sind, so dass die einzelnen Schalen 7' relativ zueinander durch Verbiegen des Materials beweglich bleiben. Statt der dargestellten drei Schalen 7' können auch nur zwei Schalen 7' oder mehr als drei Schalen 7' zur Bildung eines aus Schalen gebildeten Körpers eingesetzt werden.

In den dargestellten Ausführungsbeispielen können die Schalen 7 aus Metall oder einem harten Kunststoff hergestellt sein, um hohe Klemmkräfte an den Kugelpfannen 70 auf die Gelenkkugel 2 übertragen zu können. Der Klemmkörper 3 kann ebenfalls aus Metall oder Kunststoff hergestellt sein, um ausreichend Kräfte auf die Schalen 7 aufzubringen. Auch Verbundmaterialien können für die Schalen 2 oder den Klemmkörper eingesetzt werden.

In dem dargestellten Ausführungsbeispiel werden zwei Schalen 7 in die Aufnahme 8 eingesteckt. Es ist auch möglich, nur eine einzige Schale 7 oder mehr als zwei Schalen 7 in die Aufnahme 8 einzufügen, um die Gelenkkugel 2 klemmend festzulegen.

Statt der gezeigten Klemmeinrichtung 5 können auch andere Klemm- oder Spanneinrichtungen vorgesehen werden, die für ein Verspannen des Klemmkörpers sorgen, um die mindestens eine Schale 7 gegen die Gelenkkugel 2 zu drücken.

Aufgrund der Anordnung der Gelenkkugel 2 in den Kugelpfannen 70 kann eine Ausrichtung eines ersten Bauteils relativ zu einem zweiten Bauteil durch Verschwenken und Drehen der Gelenkkugel 2 in den Kugelpfannen 70 um mehrere Achsen erfolgen, wobei jede beliebige Position über die Klemmeinrichtung 5 fixierbar ist. Solche Gelenkanordnungen können zur Fixierung von Gerüsten, Monitorhalterungen, Fotoapparaten oder anderen Einrichtungen eingesetzt werden.

Die Gelenkkugel 2 muss keine vollständige Kugel umfassen. Für eine Gelenkkugel ist es ausreichend, wenn diese mindestens ein Kugelsegment aufweist, das in der Kugelpfanne verschwenkbar gelagert ist. Beispielsweise kann die Gelenkkugel auch als abgeplattetes Rotationsellipsoid ausgebildet sein, das mit den nicht abgeplatteten Bereichen in der Kugelpfanne gelagert ist. Auch andere Formen eines Körpers mit mindestens einem Kugelsegment sollen daher als eine Gelenkkugel im Sinne der vorliegenden Anmeldung angesehen werden.

### Bezugszeichenliste

- 1: Gelenkanordnung
- 2: Gelenkkugel
- 3: Klemmkörper
- 4: Aufnahme
- 5: Klemmeinrichtung
- 6: Hebel
- 7,7': Schale
- 8: Aufnahme
- 9: Schlitz
- 10: Halterung
- 11: Halterung
- 12: Gewindebolzen
- 13: Mutter
- 14: Schraubenkopf
- 15: Gewindebohrung
- 16: Sicherungselement
- 20: Halteelement
- 21: Verbindungsmittel
- 22: Öffnung
- 70: Kugelpfanne
- 71,71': Abschnitt
- 72: Schlitz
- 73: Öffnung
- 74: Nut
- 75: Verbindungssteg
- 76: Schlitz

## Patentansprüche

1. Gelenkanordnung (1) zur Positionierung von Bauteilen, mit einer Gelenkkugel (2), die über Befestigungsmittel mit einem ersten Bauteil verbindbar ist, und einer an der Gelenkkugel (2) fixierbaren Klemmeinrichtung, die über Befestigungsmittel mit einem zweiten Bauteil verbindbar ist, wobei die Klemmeinrichtung einen über Spannmittel (5, 6, 12) zusammendrückbaren Klemmkörper (3) aufweist, an dem eine Aufnahme (8) ausgebildet ist, in der mindestens eine Schale (7, 7') mit einer Kugelpfanne (70) zur Aufnahme eines Abschnittes der Gelenkkugel (2) angeordnet ist, die über den Klemmkörper (3) gegen die Gelenkkugel (2) anpressbar ist, **dadurch gekennzeichnet, dass** der Klemmkörper (3) eine im Wesentlichen zylinderförmige Aufnahme für mindestens zwei Schalen (7, 7') mit einer Kugelpfanne (70) aufweist, die die Gelenkkugel (2) umgreifen, und die Schalen (7, 7') eine äußere Umfangsfläche aufweisen, die im Wesentlichen zylindrisch ausgebildet ist

2. Gelenkanordnung nach Anspruch 1, **dadurch gekennzeichnet, dass** an der äußeren Umfangsfläche der Schalen (7) eine Nut (74) vorgesehen ist, in die ein Haltemittel zur Fixierung der Schalen (7) eingefügt ist.

3. Gelenkanordnung nach Anspruch 1 oder 2, **dadurch gekennzeichnet, dass** der Klemmkörper (3) an einer Seite einen Schlitz (9) aufweist, der sich parallel zur Längsrichtung der Aufnahmen (8) erstreckt.

4. Gelenkanordnung nach Anspruch 3, **dadurch gekennzeichnet, dass** benachbart zu dem Schlitz (9) an dem Klemmkörper (3) mindestens eine Halterung (10, 11) für die Spannmittel (6, 12) vorgesehen ist, mittels denen der Klemmkörper (3) zusammendrückbar ist.

5. Gelenkanordnung nach einem der vorhergehenden Ansprüche, **dadurch gekennzeichnet, dass** die Spannmittel einen verschwenkbaren Hebel (6) aufweisen, der über ein Gewinde oder eine Kurvenführung den Klemmkörper (3) zusammendrücken kann.

6. Gelenkanordnung nach einem der vorhergehenden Ansprüche, **dadurch gekennzeichnet, dass** zwei oder drei Schalen (7, 7') vorgesehen sind, die zusammen eine Hülse ausbilden.

7. Gelenkanordnung nach einem der vorhergehenden Ansprüche, **dadurch gekennzeichnet, dass** die Schalen (7, 7') integral ausgebildet sind.

8. Gelenkanordnung nach Anspruch 7, **dadurch gekennzeichnet, dass** die Schalen (7, 7') über endseitige Verbindungsstege (75) miteinander verbunden sind und zwischen den Schalen (7') ein parallel zur Längsrichtung verlaufender Schlitz (72, 76) verläuft.

9. Gelenkanordnung nach einem der vorhergehenden Ansprüche, **dadurch gekennzeichnet, dass** die mindestens eine Schale (7, 7') aus Kunststoff oder Metall hergestellt ist.

10. Gelenkanordnung nach einem der vorhergehenden Ansprüche, **dadurch gekennzeichnet, dass** an dem Klemmkörper (3) ein Sicherungselement (16) zur Fixierung einer Schale (7, 7') an dem Klemmkörper (3) vorgesehen ist.

11. Gelenkanordnung nach Anspruch 10, **dadurch gekennzeichnet, dass** das Sicherungselement (16) als radial angeordneter Gewindebolzen ausgebildet ist.

12. Gelenkanordnung nach einem der vorhergehenden Ansprüche, **dadurch gekennzeichnet, dass** der Klemmkörper (3) als Rohrverbinder ausgebildet ist.

## Claims

1. Hinge assembly (1) for positioning components, comprising a joint ball (2) which is connectable via fastening means to a first component, and a clamping device fixable to the joint ball (2), said clamping device being connectable via fastening means to a second component, wherein the clamping device comprises a clamping body (3) which is compressible via clamping means (5, 6, 12), on which a receptacle (8) is formed in which at least one shell (7, 7') is arranged with a ball socket (70) for receiving a portion of the joint ball (2), which can be pressed against the joint ball (2) via the clamping body (3), **characterized in that** the clamping body (3) has a substantially cylindrical receptacle for at least two shells (7, 7') with a ball socket (70), which engage around the joint ball (2), and the shells (7, 7') have an outer peripheral surface which is substantially cylindrically formed.

2. Hinge assembly according to claim 1, **characterized in that** a groove (74) is provided on the outer peripheral surface of the shells (7), into which a holding means for fixing the shells (7) is inserted.

3. Hinge assembly according to claim 1 or 2, **characterized in that** the clamping body (3) comprises a slot (9) on one side which extends parallel to the longitudinal direction of the receptacles (8).

4. Hinge assembly according to claim 3, **characterized in that** adjacent to the slot (9) on the clamping body (3) at least one holder (10, 11) is provided for the clamping means (6, 12), by means of which the clamping body (3) is compressible.

5. Hinge assembly according to one of the preceding claims, **characterized in that** the clamping means comprise a pivotable lever (6) which can compress the clamping body (3) via a thread or a cam guide.

6. Hinge assembly according to one of the preceding claims, **characterized in that** two or three shells (7, 7') are provided, which jointly form a sleeve.

7. Hinge assembly according to one of the preceding claims, **characterized in that** the shells (7, 7') are integrally formed.

8. Hinge assembly according to claim 7, **characterized in that** the shells (7, 7') are interconnected via end-side connecting webs (75), and a slot (72, 76) extending parallel to the longitudinal direction extends between the shells (7').

9. Hinge assembly according to one of the preceding claims, **characterized in that** the at least one shell (7, 7') is made of plastic or metal.

10. Hinge assembly according to one of the preceding claims, **characterized in that** a securing element (16) is provided on the clamping body (3) for fixing a shell (7, 7') to the clamping body (3).

11. Hinge assembly according to claim 10, **characterized in that** the securing element (16) is designed as a radially arranged threaded bolt.

12. Hinge assembly according to one of the preceding claims, **characterized in that** the clamping body (3) is designed as a pipe connector.

## Revendications

1. Dispositif d'articulation (1) permettant le positionnement de composants comprenant une rotule d'articulation (2) pouvant être reliée à un premier composant par l'intermédiaire de moyens de fixation ainsi qu'un dispositif de blocage pouvant être fixé à la rotule d'articulation (2) et pouvant être relié à un second composant par l'intermédiaire de moyens de fixation, le dispositif de blocage comprenant un corps de blocage (3) pouvant être comprimé par des moyens de serrage (5, 6, 12), sur lequel est formé un logement (8) dans lequel est monté au moins une coque (7, 7') équipée d'un coussinet sphérique (70) permettant de recevoir un segment de la rotule d'articulation (2) et qui peut être comprimé contre la rotule d'articulation (2) par l'intermédiaire du corps de blocage (3),
**caractérisé en ce que**
le corps de blocage (3) comporte un logement de forme essentiellement cylindrique permettant de recevoir au moins deux coques (7, 7') équipées d'un coussinet sphérique (70) qui viennent en prise autour de la rotule d'articulation (2), et les coques (7, 7') ont une surface périphérique essentiellement cylindrique.

2. Dispositif d'articulation conforme à la revendication 1,
**caractérisé en ce qu'**
il est prévu sur la surface périphérique externe des coques (7), une rainure (74) dans laquelle est inséré un organe de retenue permettant la fixation des coques (7).

3. Dispositif d'articulation conforme à la revendication 1 ou 2,
**caractérisé en ce que**
le corps de blocage (3) comporte, sur un côté, une fente (9) qui s'étend parallèlement à la direction longitudinale du logement de réception (8).

4. Dispositif d'articulation conforme à la revendication 3,
**caractérisé en ce qu'**
il est prévu sur le corps de blocage (3) au voisinage de la fente (9) au moins un organe de retenue (10, 11) des moyens de serrage (6, 12) au moyen duquel le corps de blocage (3) peut être comprimé.

5. Dispositif d'articulation conforme à l'une des revendications précédentes,
**caractérisé en ce que**
les moyens de serrage comportent un levier pivotant (6) permettant de comprimer le corps de blocage (3) par l'intermédiaire d'un filetage ou d'un guidage à cames.

6. Dispositif d'articulation conforme à la revendication 1,
**caractérisé en ce qu'**
il est prévu deux ou trois coques (7, 7') qui forment conjointement un manchon.

7. Dispositif d'articulation conforme à l'une des revendications précédentes,
**caractérisé en ce que**
les coques (7, 7') sont réalisées intégralement.

8. Dispositif d'articulation conforme à la revendication 7,
**caractérisé en ce que**
les coques (7, 7') sont reliées par des barrettes de liaison d'extrémité (75), et une fente (72, 76) parallèle à la direction longitudinale s'étend entre les coques (7').

9. Dispositif d'articulation conforme à l'une des revendications précédentes,
**caractérisé en ce que**
la coque (7, 7') est réalisée en matériau synthétique ou en métal.

10. Dispositif d'articulation conforme à l'une des revendications précédentes,
**caractérisé en ce qu'**
il est prévu, sur le corps de blocage (3), un élément de sécurité (16) permettant de fixer une coque (7, 7') sur le corps de blocage (3).

11. Dispositif d'articulation conforme à la revendication 10,
**caractérisé en ce que**
l'élément de sécurité (16) est réalisé sous la forme d'un goujon fileté monté radialement.

12. Dispositif d'articulation conforme à l'une des revendications précédentes,
**caractérisé en ce que**
le corps de blocage (3) est réalisé sous la forme d'un organe de liaison tubulaire.
